# EUROPEAN PATENT APPLICATION

(11) **EP 4 528 156 A1**
(43) Date of publication of application: **26.03.2025**
(21) Application number: 23020441.4
(22) Date of filing: 22.09.2023
(51) Int. Cl.: F23C 5/08, F23C 6/04, F23D 14/32, F23L 7/00

(54) **METHOD AND ARRANGEMENT FOR COMBUSTING AMMONIA**

(71) Applicant: Selas-Linde GmbH, 82049 Höllriegelskreuth (DE)
(72) Inventor: Bokker, Fokke, 82049 Pullach (DE); Murer, Martin, 82049 Pullach (DE)
(74) Representative: Lu, Jing

(57) **Abstract**

A method for combusting ammonia provided in a combustion feed (1) using a combustion arrangement (100) comprising a combustion section (110), a flue gas section (120), and a plurality of burners (111, 112) arranged in the combustion section (110) is provided, wherein the plurality of burners (111, 112) are operated using the combustion feed and oxygen delivered to the plurality of burners (111, 112), and wherein a flue gas (2) formed in the combustion section (110) is passed through the flue gas section (120). Further oxygen is delivered to the combustion section (110) via a plurality of gas injectors (114-117) arranged in the combustion section (110) separately from and in a distance to each of the plurality of burners (111, 112). A corresponding combustion arrangement (100) is also provided.

## Description

The present invention relates to a method and a combustion arrangement for combusting ammonia.

### Background

Ammonia may be an attractive fuel and a "storage form" for hydrogen less difficult to handle than compressed or liquefied hydrogen gas. As summarized in an article by Alexander H. Tullo, "Is ammonia the fuel of the future?", Chemical and Engineering News 2021, Volume 99, Issue 8, ammonia has a higher energy density, at 12.7 MJ/L, than even liquid hydrogen, at 8.5 MJ/L. Liquid hydrogen has to be stored at cryogenic conditions of -253 °C, whereas ammonia can be stored at a much less energy-intensive -33 °C. Furthermore, ammonia, though hazardous to handle, is much less flammable than hydrogen. Due to the wide use of ammonia in agriculture, an ammonia infrastructure already exists. Worldwide, about 180 Mt of ammonia are produced annually, and 120 ports worldwide are already equipped with ammonia terminals.

Ammonia may be used for co-firing in thermal power plants, for example, in order to provide additional energy, but also to provide better control of nitrous oxides formation. For example, JP 2020-112280 A discloses a furnace comprising a plurality of burners which are adapted to use pulverized coal as a fuel, the coal being introduced into the burners by being entrained by combustion air in a combustion air tube. For co-firing ammonia, an inner tube in the combustion air tube is provided. A similar arrangement is disclosed in JP 2018-096680 A.

Combustion of pure or high concentration ammonia is still in its infancy and corresponding information is mainly availably from research papers. As traces of ammonia and ammonia radicals (NHᵢ) are also released from nitrogen sources in other fuels, ammonia combustion chemistry has been investigated in nitrous oxides (NOₓ) formation pathways for the combustion and fuels and give an idea on the emission problems which might occur with high ammonia containing fuels. Various reaction paths lead from ammonia to undesired nitrous oxides but also to desired nitrogen gas.

Using ammonia as fuel, nitrous oxide formation will increase, and additional effort must be taken to reduce nitrous oxides emissions.

### Summary

In view of the above, a method and a combustion arrangement comprising the features of the independent claims are provided. Embodiments are the subject of the dependent claims and of the description that follows.

Herein, a method for combusting ammonia provided in a combustion feed using a combustion arrangement comprising a combustion section, a flue gas section, and a plurality of burners arranged in the combustion section is proposed, wherein the plurality of burners are operated using the combustion feed and oxygen delivered to the plurality of burners, and wherein a flue gas formed in the combustion section is passed through the flue gas section.

As proposed herein, further oxygen is delivered to the combustion section via a plurality of gas injectors arranged in the combustion section separately from and in a distance to each of the plurality of burners.

The proposed method solves a main challenge in ammonia-fired furnaces by providing a possibility to run at least some of the burners at sub-stoichiometric conditions, as also discussed further below in connection with certain embodiments. Running the burners at sub-stoichiometric conditions, and adding oxygen downstream of the combustion into a furnace chamber, reduces nitrous oxides formation and therefore reduces the need for nitrous oxygen reduction in catalytic or non-catalytic downstream processes. Overall, a significant reduction in the nitrous oxides content in the flue gas leaving the flue gas section is achieved in embodiments disclosed herein. At the same time, the ammonia contents of the flue gas (ammonia slip) resulting from uncombusted ammonia are reduced or eliminated, as such uncombusted ammonia can still react with the further oxygen downstream of the burners.

In summary, embodiments disclosed herein include a simple and robust implementation of additional "air stage" for lower nitrous oxides emissions from the combustion of ammonia-containing fuels.

In embodiments of the proposed method, the oxygen supplied to the plurality of burners and/or the further oxygen supplied to the combustion section via the plurality of gas injectors arranged in the combustion section is provided in the same or different oxygen-containing fluids, particularly selected from at least one of pure oxygen, technical oxygen, oxygen-enriched air, nitrogen-enriched air, and atmospheric air. Fluids of the same, or different, compositions can be used. In other words, if reference to "oxygen delivered to the burners" and "further oxygen" is made herein, this is not to be understood to be limited to pure oxygen.

Aspects as proposed herein include operating the burners to produce an ammonia slippage (i.e., leave an amount of ammonia in uncombusted state) which can react, however, further downstream by adjusting the supply of air or another oxygen-containing gas mixture, or even pure oxygen, via the gas injectors proposed herein. Embodiments proposed herein allow for locally and/or temporally adjusting the amount of oxygen supplied to the combustion zone.

In embodiments, the oxygen delivered to the plurality of burners is delivered to the plurality of burners in a sub-stoichiometric oxygen amount, taking the amount of ammonia delivered to the plurality of burners as a basis. The relative oxygen and ammonia amounts may also be expressed as a lambda value which may, in embodiments, be in a range from about 0.9 to 0.95. The values may also be expressed in fuel-air equivalence ratios or phi values, as also known to the skilled person. For information as to the ammonia slippage at different stoichiometric ratios, reference is made to literature, e.g. Elbaz et al., "Review on the recent advances on ammonia combustion from the fundamentals to the applications", Fuel Communications 2022, Volume 10, Page 100053, e.g., Figure 31.

In embodiments, the combustion feed comprises ammonia in a content of 1% to 100% on a molar, mass or volume basis. The present invention may therefore be used in connection with a large type of different feeds.

The gas injectors and the burners may, in embodiments as proposed herein, be distributed in the combustion section according to a predefined distribution pattern, particularly at a roof of the combustion section, but embodiments as disclosed herein are not limited to such an arrangement. While providing additional oxygen downstream of the burners by the gas injectors, distributing the gas injectors and the burners in an appropriate way may particularly result in a good and even distribution of the fluids concerned without mixing equipment as necessary according to the prior art. This is particularly realized, in embodiments disclosed herein, in a burner array, in which between each n-th pair of adjacent burners, a gas injector may be provided. Gas injectors may also be provided between a burner array and a wall of the combustion section, and n may be selected from an integer such as 1, 2, 3, 4, 5 or more, particularly up to 10. The distribution may not be the same throughout the combustion section, but at zones where additional oxygen, or additional mixing, is recognized to be required, additional gas injectors may be provided.

The gas injectors may therefore, in certain embodiments, be distributed among the burners according to a predefined distribution pattern (which may be the same or different in different regions of the combustion zone) to reach such a good and even distribution. This may be a regular or irregular distribution pattern which may be selected by the skilled person accordingly and depending on local concentrations observed, for example. By a momentum introduced by the gas injectors, the internal recirculation of flue gas is improved, and a part of the heat release from combustion is delayed, which homogenizes the temperature distribution in the combustion zone. This has an additional benefit for thermal formation of nitrous oxides and results in more evenly heated process tubes running through the combustion zone.

In embodiments, the gas injectors may particularly be provided as gas nozzles and/or as gas lances. The former option may particularly be selected as an easy solution for smaller arrangements, while the latter may an attractive choice for large combustion zones and corresponding needs for solutions providing particularly even distribution of fluids and heat. The term "gas lance" is used herein as common in the field of industrial burners. Reference is made to corresponding text book literature. A gas lance is typically provided as a tube of a suitable material which protrudes into a reaction zone, furnace or the like, and through which a gas is introduced as desired. Gas lances may, or may not, be provided with additional equipment such as cooling channels, etc.

In certain embodiments, and in case gas lances are used, the gas lances may include one or more gas lances of different lengths and/or one or more gas lances arranged at a roof of the combustion section and/or one or more gas lances arranged at a floor of the combustion section and/or one or more gas lances arranged at a side-wall of the combustion section. The specific sizes and positions may be selected on the basis of flow considerations, and also on the basis of a burner arrangement (such as in configurations where side-wall or floor burners are provided additionally or alternatively to the more conventional roof burners). For example, gas lances protruding into the combustion section from opposite sides or more than two sides may also be used.

In certain embodiments, the gas lances may include one or more gas lances produced from, or including, a refractory material selected from at least one of silicon carbide and alumina. Generally, in embodiments as disclosed herein, the gas lances are (only) required to withstand the pressure drop of the burners, which is in the range of 10 to 20 mbar. Therefore, in certain embodiments as disclosed herein, the gas lances can be designed with a comparatively low wall thickness and cooling by the gas which is supplied by the gas lances may be sufficient. This allows the gas lances, in certain embodiments, to be manufactured from stainless steel 310 / 1.4845 or other high temperature resistant steels or alloys. Nitrous oxides chemistry processes are progressing rather fast, and typically within a time frame of less than one second. Therefore, the gas lances can be kept rather short, such as in a range from 1 to 6 m. The gas supply to the gas lances can be controlled independently to a gas supply to the burners, thus particularly allowing fine tuning during commissioning and varying the stoichiometry at the burners for different loads.

At least some of the gas lances may, in embodiments of the present invention, comprise one or more apical gas outlets (i.e., gas outlets at, or close to, the tip of the gas lances) and/or one or more sub-apical gas outlets (i.e., gas outlets provided in some distance to the tip), in order to provide gas more evenly. Notwithstanding to the arrangement of the gas lances, the burner may comprise dedicated ports for the combustion feed and/or for an oxidator gas such as mentioned, in order to adapt the stoichiometry. These may also be additional ports such that the main combustion of a burner is not disturbed. The burners can be modified with some having extra air nozzles while others have extra fuel nozzles or even dedicated ammonia nozzles for furnaces running on dual fuel systems.

In embodiments of the present invention, the further oxygen delivered by the gas injectors may be supplied by one or more of the gas injectors with a supersonic velocity, which particularly results in intensive mixing.

One or more of the gas injectors may be configured such that the further oxygen delivered to the gas injectors is expelled from different ones of the gas injectors in different velocities or from the same gas injectors in different directions. Again, this may be selected on the basis of mixing considerations.

The combustion arrangement is operated at a maximum temperature of less than 1.100 °C, particularly from 900 to 1.100 °C, in embodiments proposed herein. Since ammonia has relatively low flame temperature, operating close to stoichiometry does not result in excessive temperatures in the furnace. The burners may include burners operated at different lambda values and/or include swirl burners and/or flameless oxidation burners.

The combustion arrangement for combusting ammonia provided in a combustion feed, as proposed herein, comprises a combustion section, a flue gas section, and a plurality of burners arranged in the combustion section. The combustion arrangement is configured to operate the plurality of burners using the combustion feed and oxygen delivered to the plurality of burners, and to pass a flue gas formed in the combustion section through the flue gas section.

As proposed, the combustion arrangement is configured to deliver further oxygen to the combustion section via a plurality of gas injectors arranged in the combustion section separately from and in a distance to each of the plurality of burners.

As to further features and advantages of an inventive arrangement and its possible embodiments, particular reference is made to the description of the method according to the present invention and its embodiments as described before. An arrangement according to the present invention is particularly adapted to perform a corresponding method or an embodiment thereof.

The present invention will further be described with reference to the appended drawings illustrating embodiments of the present invention.

### Brief description of the drawings

Figure 1 illustrates a combustion arrangement according to an embodiment.
Figure 2 illustrates a combustion zone of a combustion arrangement according to an embodiment in a top view or horizontal section.

### Detailed description

In the Figures, elements of identical, essentially identical, functionally comparable, or technically compatible function and/or purpose and/or construction may be identified with identical reference numerals, and repeated explanations may be omitted for reasons of conciseness. Explanations herein relating to devices, apparatus, arrangements, systems, etc., according to embodiments of the present invention likewise may apply to methods, processes, procedures, etc. according to embodiments of the present invention and vice versa.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be claimed in future, particularly when encompassed by the scope of the independent claims.

Reaction paths of ammonia and ammonia radicals to nitrogen monoxide and nitrogen are discussed elsewhere, for example in T. Kolb, "Experimentelle und theoretische Untersuchungen zur Minderung der NOx-Emission technischer Feuerungen durch gestufte Verbrennungsführung", VGB-Kraftwerkstechnik 1990, Volume 70, Issue 8, and M.J. Murer, "Numerical methods for efficient power generation from municipal solid waste", Technische Universität München, Dissertation 2014, particularly Figure 3.4.

As mentioned, one of the main challenges for avoiding nitrous oxide formation is a good distribution of gases and heat in the combustion section. These challenges are addressed by aspects of the invention.

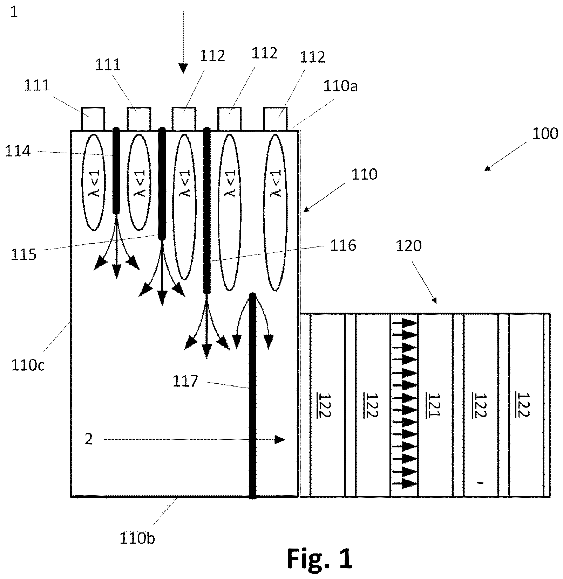

Figure 1 illustrates a combustion arrangement 100 according to an embodiment. Arrangement 100 comprises a combustion section 110 and a flue gas section 120. The combustion section may also be referred to as a "furnace", a "firebox", etc. The flue gas section is sometimes also referred to as a "convection section".

As shown in a strictly simplified manner, a combustion feed 1, such as an ammonia-containing gas mixture or pure ammonia, may be supplied to arrangement 100, i.e., to a plurality of burners 111, 112 which are, in the example illustrated, but not limiting the scope of the invention, arranged at a roof of combustion section 110.

A selective catalytic or non-catalytic nitrous oxide reduction zone 121may be arranged in the flue gas section 120 in a manner generally also known to the skilled person. The plurality of burners 111, 112 are operated using the combustion feed 1, and a flue gas 2 formed in the combustion section 110 is passed through the flue gas section 120. As not shown in detail, oxygen is supplied, e.g. as part of atmospheric air, oxygen-enriched air, or nitrogen-enriched air, to the plurality of burners in an amount depending of a desired stoichiometric ratio.

As illustrated with "λ < 1", the burners are operated at sub-stoichiometric conditions as mentioned above, where a flame zone of the burners 111, 112 may be different. Different burners 111, 112 may also be operated with different stoichiometric values, provided in different configurations and sizes, etc.

That is, by adjusting the oxygen supply to the burners 111, 112, these burners 111, 112 will run on sub-stoichiometric conditions.

Upstream and downstream of the catalytic or non-catalytic nitrous oxide reduction zone 121, a plurality of heat recovery bundles 122 may be provided. Any type of heat recovery bundles can be used, and these may particularly be adapted for reaction feed heating, boiler feed heating, steam heating or superheating, and heating of media used in processing of certain materials, such as typically the case in a convection zone of a steam cracking furnace.

Furthermore, between the burners 111, 112, or some of them, steam tubes or any other type of units for heating certain media are arranged, as not shown in Figure 1 for clarity. Again, these may be coils for heating or reacting process gas like in steam cracker furnaces or direct reduction iron heaters or reaction coils filled with catalyst like in steam methane reformers or ammonia crackers.

As shown in Figure 1, a plurality of gas injectors, which are configured in this example as gas lances 114-117, may be provided, and a gas supplying further oxygen to the combustion zone 110 may be introduced into the combustion zone via these.

The gas lances 114-117 may include, as shown, one or more gas lances 114-117 of different lengths and/or one or more gas lances 114-116 arranged at a roof 110a of the combustion section 110 and/or one or more gas lances 117 arranged at a floor 110b of the combustion section 110. Additionally or alternatively, but not shown in detail, and/or one or more gas lances arranged at a side-wall 110c of the combustion section 110 may be provided in certain embodiments. At least some of the gas lances 114-117 may comprise one or more apical gas outlets and/or one or more sub-apical gas outlets, the further oxygen delivered to the gas injectors 114-117 may be supplied to one or more of the gas injectors 114-117 with a supersonic velocity, and/or the further oxygen delivered to the gas injectors 114-117 (or a corresponding gas mixture) may be expelled from different gas lances 114-117 in different velocities or from the same gas lances 114-117 in different directions. For reasons of clarity only, a gas expelled from the gas lances 114-117 is shown in some instances with arrows in Figure 1.

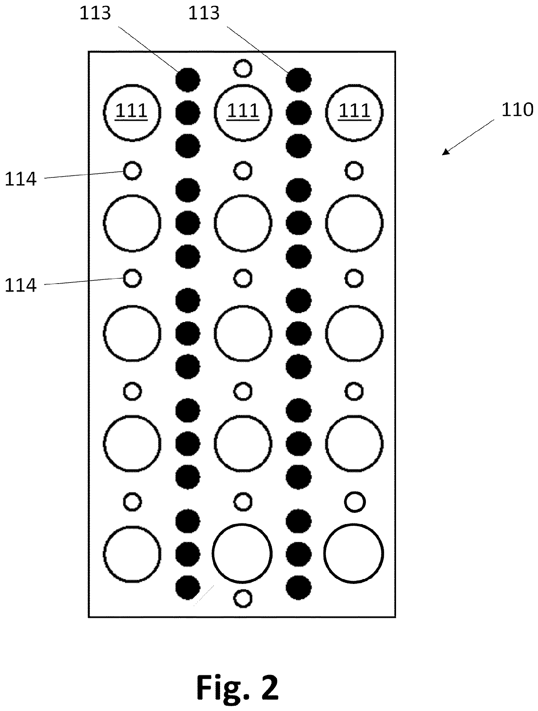

Figure 2 illustrates different options for gas lance and burner distributions according to certain embodiments in a schematic top (or horizontal sectional) view of a combustion section, such as the combustion section 110 shown in Figure 1.

Figure 2 illustrates how the gas lances 114 (which are illustrated as small white or unfilled circles and only partly indicated by reference numerals) may be distributed among burners 111(which are illustrated as large white or unfilled circles and are and only partly indicated by reference numerals) in the combustion section 110 according to a predefined distribution pattern. While the gas lances 114, or a part thereof, are all indicated with reference numeral 114 for reasons of simplicity, these may all or in part be provided in different configurations and either at the roof or the floor. The same is the case for the burners, which are indicated only by reference 111 in Figure 2.

## Claims

1. A method for combusting ammonia provided in a combustion feed (1) using a combustion arrangement (100) comprising a combustion section (110), a flue gas section (120), and a plurality of burners (111, 112) arranged in the combustion section (110), wherein the plurality of burners (111, 112) are operated using the combustion feed and oxygen delivered to the plurality of burners (111, 112), and wherein a flue gas (2) formed in the combustion section (110) is passed through the flue gas section (120), **characterized in that** further oxygen is delivered to the combustion section (110) via a plurality of gas injectors (114-117) arranged in the combustion section (110) separately from and in a distance to each of the plurality of burners (111, 112).

2. The method according to claim 1, wherein the oxygen supplied to the plurality of burners (111, 112) and the oxygen supplied to the combustion section (110) via the plurality of gas injectors (114-117) arranged in the combustion section (110) is provided in the same or in different oxygen-containing fluids

3. The method according to claim 2, wherein the oxygen-containing fluid or fluids is or are selected from at least one of pure oxygen, technical oxygen, oxygen-enriched air, nitrogen-enriched air, and atmospheric air.

4. The method according to any one of the preceding claims, wherein the oxygen delivered to the plurality of burners (111, 112) is delivered to the plurality of burners (111, 112) in a sub-stoichiometric oxygen amount as compared to an amount of ammonia delivered to the plurality of burners (111, 112).

5. The method according to any of the preceding claims, wherein the combustion feed comprises ammonia in a content of 1% to 100% on a molar basis, mass basis or volume basis.

6. The method according to any of the preceding claims, wherein the gas injectors (114-117) and the burners (111, 112) are distributed in the combustion section (110) according to a predefined distribution pattern.

7. The method according to claim 6, wherein the gas injectors (114-117) include at least one of one or more gas injector nozzles.

8. The method according to any of the preceding claims, wherein at least some of the gas injectors are provided as one or more gas lances (114-117).

9. The method according to claim 8, wherein the gas lances (114-117) include one or more gas lances (114-117) of different lengths and/or one or more gas lances (114-116) arranged at a roof (110a) of the combustion section (110) and/or one or more gas lances (117) arranged at a floor (110b) of the combustion section (110) and/or one or more gas lances arranged at a side-wall (110c) of the combustion section (110).

10. The method according claim 8 or 9, wherein the gas lances (114-117) include one or more gas lances (114-117) produced from, or including, a refractory material selected from at least one of silicon carbide and alumina.

11. The method according to any one of claims 8 to 10, wherein at least some of the gas lances (114-117) comprise one or more apical gas outlets and/or one or more sub-apical gas outlets.

12. The method according to any of the preceding claims, wherein the further oxygen delivered to the gas injectors (114-117) is supplied to one or more of the gas injectors (114-117) with a supersonic velocity.

13. The method according to any of the preceding claims, wherein the further oxygen delivered to the gas injectors (114-117) is expelled from different gas injectors (114-117) in different velocities or from the same gas injectors (114-117) in different directions.

14. The method according to any of the preceding claims, wherein the burners (111, 112) include burners (111, 112) operated at different lambda values and/or include swirl burners and/or flameless oxidation burners.

15. A combustion arrangement (100) for combusting ammonia provided in a combustion feed (1), the combustion arrangement (100) comprising a combustion section (110), a flue gas section (120), and a plurality of burners (111, 112), arranged in the combustion section (110), wherein the combustion arrangement (100) is configured to operate the plurality of burners (111, 112) using the combustion feed and oxygen delivered to the plurality of burners (111, 112), and to pass a flue gas (2) formed in the combustion section (110) through the flue gas section (120), **characterized in that** the combustion arrangement (100) is configured to deliver further oxygen to the combustion section (110) via a plurality of gas injectors (114-117) arranged in the combustion section (110) separately from and in a distance to each of the plurality of burners (111, 112).
